# EUROPEAN PATENT APPLICATION

(11) **EP 4 311 646 A1**
(43) Date of publication of application: **31.01.2024**
(21) Application number: 22382733.8
(22) Date of filing: 29.07.2022
(51) Int. Cl.: B29B 17/04, E04G 9/05, B32B 5/02, B29C 70/02, B29C 70/18, B29B 17/00

(54) **PANEL FOR CONCRETE FORMWORK AND PRODUCTION METHOD THEREOF**

(71) Applicant: ULMA C y E, S. COOP., 20560 Oñati (Guípuzcoa) (ES)
(72) Inventor: OLLO ODRIOZOLA, Ander, 20700 ZUMARRAGA (ES); COLINO VEGA, Manuel, 01015 VITORIA - GASTEIZ (ES); ALLUE SALVADOR, Alexandra, 48170 Zamudio (ES); GONDRA ZUBIETA, Joseba Koldo, 48170 Zamudio (ES)
(74) Representative: Igartua, Ismael

(57) **Abstract**

Panel for concrete formwork comprising a polymer core (1) and a reinforcement layer (2) on at least one of the sides of the core (1). The reinforcement layer (2) comprises woven glass fibre. The core (1) comprises thermosetting polymer waste, a glass fibre filler, and a thermosetting resin, wherein the glass fibre filler is a glass fibre filler present in the thermosetting polymer waste, and/or a glass fibre filler apart from the thermosetting polymer waste. The invention also relates to a production method of a panel such as the one described above.

## Description

### TECHNICAL FIELD

The present invention relates to panels for concrete formwork and to production methods thereof.

### PRIOR ART

Panels for concrete formwork typically comprise a wooden core conferring very good mechanical features upon them at a competitive price. Panels with the same features as typical panels with a wooden core are also known, comprising a polymer core and a reinforcement layer on at least one of the sides of the core.

EP1635010A1 discloses a panel for concrete formwork comprising a polymer core and optional layers on at least one face of the core. The polymer core comprises thermoplastic waste, specifically recycled polypropylene, combined with rubber waste.

### DISCLOSURE OF THE INVENTION

The object of the invention is to provide a panel for concrete formwork and a production method thereof, as defined in the claims.

A first aspect of the invention relates to a panel for concrete formwork comprising a polymer core and a reinforcement layer on at least one of the sides of the core. The reinforcement layer comprises woven glass fibre. The core comprises thermosetting polymer waste, a glass fibre filler, and a thermosetting resin, wherein the glass fibre filler is a glass fibre filler present in the thermosetting polymer waste, and/or a glass fibre filler apart from the thermosetting polymer waste.

A second aspect of the invention relates to a production method of a structural panel such as the one described above, the method comprising the steps of:
a. grinding the thermosetting polymer waste,
b. mixing the thermosetting resin and the glass fibre filler apart from the thermosetting polymer waste with the ground thermosetting polymer waste,
d. forming the mixture by curing the thermosetting resin such that it acts as a binder of the ground thermosetting polymer waste and of the glass fibre filler in order to obtain the panel.

With the panel of the invention, an alternative to panels for concrete formwork with a wooden core, and also to panels with a core with thermoplastic waste, is obtained. The panel of the invention complies with the mechanical features required and allows the utilisation of thermosetting polymer waste, which is difficult to recycle and highly contaminating.

These and other advantages and features of the invention will become apparent in view of the figures and the detailed description of the invention.

### DESCRIPTION OF THE DRAWINGS

Figure 1 is a sectioned front view of a panel according to a preferred embodiment of the invention.
Figure 2 is a sectioned front view of a panel according to a second embodiment of the invention in a horizontal concrete formwork.

### DETAILED DISCLOSURE OF THE INVENTION

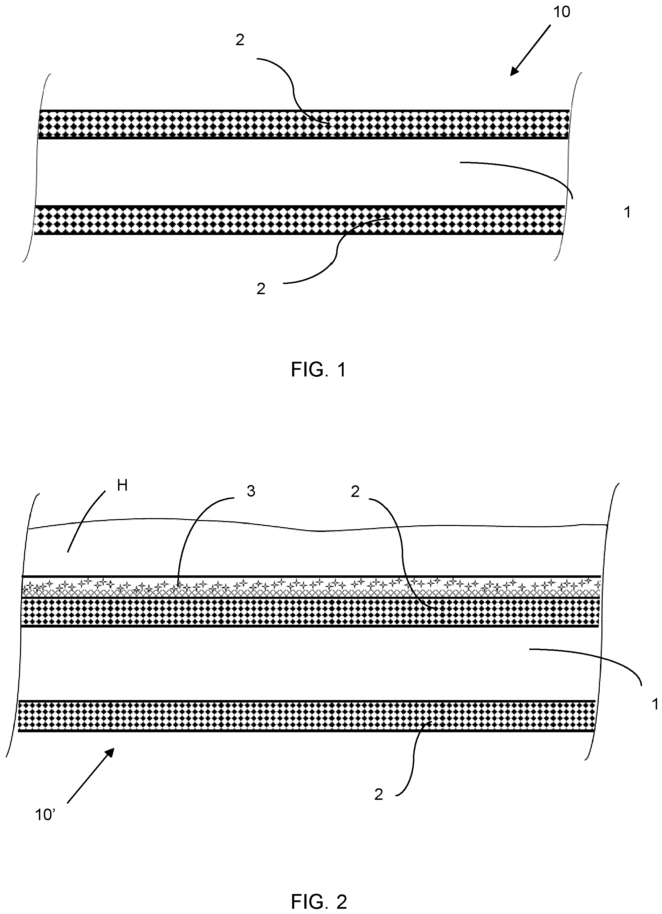

The panel 10; 10' for concrete formwork of the invention comprises a polymer core 1 and a reinforcement layer 2 on at least one of the sides of the core 1, as shown in Figures 1 and 2. The reinforcement layer 2 comprises woven glass fibre, and the core 1 comprises thermosetting polymer waste, a glass fibre filler, and a thermosetting resin, wherein the glass fibre filler is a glass fibre filler present in the thermosetting polymer waste, and/or a glass fibre filler apart from the thermosetting polymer waste. In other words, the glass fibre filler in the core 1 is the sum of a glass fibre filler present in the thermosetting polymer waste and/or a glass fibre filler added to said thermosetting polymer waste during the production method of the panel.

In those cases where all the glass fibre filler is present in the thermosetting polymer waste, having to add an additional glass fibre filler which is apart from the thermosetting polymer waste to the thermosetting polymer waste is avoided, whereby reducing the raw material cost. In those cases where the glass fibre filler in the thermosetting polymer waste is residual, in addition to the thermosetting polymer waste, all the glass fibre filler of the core must be added separately. However, in most cases, a part of this is already present in the thermosetting polymer waste and the other part will have to be added separately. The percentage of the glass fibre filler apart from the thermosetting polymer waste that will have to be added will depend on the type of starting thermosetting polymer waste.

Instead of comprising thermoplastic waste, the core 1 comprises thermosetting polymer waste. In fact, the thermosetting polymer waste is preferably the main compound of the core with a majority percentage by weight.

The thermosetting polymer material is processed by means of hot curing in which polymer bonds are formed, acquiring rigidity. Thermosetting polymer waste is a tailing, remnant, or excess of thermosetting polymer material that is disposed of as it is cured, and it cannot be heated again and moulded because it degrades, unlike thermoplastic waste, which can be moulded and heated again as many times needed. Therefore, although the thermosetting polymer waste, like all polymer material waste, is contaminating because the decomposition thereof lasts for several generations, it is more difficult to recycle or be reused at a competitive cost.

To be able to reuse the thermosetting polymer waste, the ground thermosetting waste is mixed with the thermosetting resin. Regardless of the fact that the thermosetting polymer waste may comprise thermosetting resin, said thermosetting resin of the waste is not valid because it is in a cured or semi-cured state, where the panel of the invention requires a thermosetting resin that has not been previously cured to be able to act as a binder of the thermosetting polymer waste. The thermosetting resin of the core thereby acts as a binder of the ground thermosetting polymer waste and of the glass fibre filler when forming the core.

The panel of the invention for concrete formwork complies with the mechanical features required of formwork applications such as, for example, a flexural strength of at least 30 MPa and a flexural modulus of at least 3500 MPa. Said mechanical features in the panel of the invention are achieved particularly as a result of the glass fibre filler of the core and the woven glass fibre of the reinforcement layer.

The glass fibre filler is formed by glass fibres that are cut up and dispersed in the core. In contrast, in woven glass fibre, the glass fibres are interwoven with one another forming a single-layer bidirectional glass fibre fabric, or a multi-layer three-dimensional glass fibre fabric. Although the glass fibre improves the mechanical features at a relatively competitive prices compared to other fibres, the woven glass fibre provides even better mechanical features that the cut-up glass fibre.

With the panel of the invention, an alternative to panels for concrete formwork with a wooden core, and also to panels with a core with thermoplastic waste, is obtained. The panel of the invention complies with the mechanical features required and allows the utilisation of thermosetting polymer waste, which is difficult to recycle and highly contaminating.

In a first embodiment shown in Figure 1, the panel 10 comprises a reinforcement layer 2 on either side of the core 1 forming a sandwich type panel. A panel with better mechanical features which is easier to produce as a result of said symmetrical construction which traps the ground thermosetting polymer waste of the core between the reinforcement layers is thereby achieved.

The percentage by weight of the thermosetting resin can be between 5% and 15% of the weight of the core 1.

The thermosetting polymer waste preferably comprises epoxy and/or melamine waste. In other embodiments, the thermosetting polymer waste can comprise phenolic, ureic, or polyester waste, or a combination of the mentioned waste.

The total glass fibre filler in the core 1 is at least 30% of the weight of the core 1, preferably 40%. The higher the percentage by weight of the glass fibre filler, the better the mechanical features are obtained in the panel.

The glass fibre filler can be cut glass fibre yarns of a length between 5 mm and 35 mm, preferably between 10 mm and 15 mm. With said glass fibre length interval, a compromise between good mechanical features and production difficulty with good impregnation and dispersion thereof is sought.

The thermosetting resin is preferably a phenolic resin, which is very cost-competitive. The thermosetting resin can also be a melamine resin or a combination of phenolic resin and melamine resin.

The woven glass fibre of the reinforcement layer 2 can be pre-impregnated in a thermosetting resin, said thermosetting resin being of the same type as the thermosetting resin of the core 1. The fibre pre-impregnated in resin is also known as prepeg. It thereby allows the joint forming of the core 1 and the reinforcement layer 2 in a single forming process, and a panel with very good adhesion is obtained. In the joint forming step for forming the core 1 and the reinforcement layer 2, the thermosetting resin of the reinforcement layer 2, on one hand, acts as a binder of the woven glass fibres and, on the other hand, flows into the core 1 and is cured at the same time as the thermosetting resin of the core 1, and since both are resins of the same type, the core 1 and the reinforcement layer 2 are chemically bound to one another.

Preferably, the woven glass fibre of the reinforcement layer 2 is a polymer moulding compound supplied in the form of a glass fibre-reinforced sheet, also known as GF-SMC, or glass fibre sheet moulding compound.

The reinforcement layer 2 can have a basis weight of 60 to 1200 g/m², preferably 60 to 200 g/m². Although better mechanical features in the panel are achieved at a higher basis weight of the reinforcement layer 2, a basis weight of 60 to 200 g/m² allows the required mechanical features to be achieved and the reinforcement layer 2 to be able to be formed together with the core 1 in a single forming step without requiring additional equipment for a second or third forming step.

In a second embodiment shown in Figure 2, the panel 10' comprises, in addition to the above-mentioned features, a finishing skin 3 on at least one reinforcement layer 2, said reinforcement layer 2 being the reinforcement face which is in contact with the cast concrete H, the finishing skin 3 comprising melamine resin and aluminium oxide particles. The aluminium oxide is preferably corundum. The panel 10' thereby comprises on the face in contact with the cast concrete a non-slip smoothly finished surface with very good abrasion resistance. Said finishing skin is particularly advantageous in concrete formwork panels.

The basis weight of the reinforcement layer 2 for achieving the mechanical features required can be limited when forming the core 1 and the reinforcement layer 2 in a single forming cycle because a too high basis weight of the reinforcement layer 2 can hinder proper curing of the thermosetting resin of the core 1. Therefore, the finishing skin 3 preferably comprises a woven glass fibre mesh or a plurality of woven glass fibre meshes. The finishing skin 3 thereby provides part of the mechanical features to the panel 10', allowing the basis weight in the reinforcement layer 2 to be reduced in order to achieve specific mechanical features or allowing better mechanical features to be achieved by maintaining the basis weight of the reinforcement layer 2.

Preferably, the woven glass fibre mesh of the finishing skin 3 has a basis weight equal to or less than 200 g/m². The woven glass fibre mesh can thereby be well-impregnated in the melamine resin and, therefore, can be well-adhered to the finishing skin 2 and provide good flexural strength.

Preferably, the woven glass fibre mesh or the plurality of woven glass fibre meshes is arranged away from the contact face with the cast concrete H. It therefore does not affect the properties required of the contact face with concrete, such as a smooth finish, good resistance to wear, and chemical resistance.

Table 1 below shows the values of flexural modulus and flexural strength obtained in tests with a pair of example panels 10 according to the invention (Sample 1 and Sample 2).

**Table 1**

| | **Sample 1** | **Sample 2** |
|---|---|---|
| Core | 55% thermosetting polymer waste/ 30% glass fibre filler/ 15% thermosetting resin | 55% thermosetting polymer waste/ 30% glass fibre filler/ 15% thermosetting resin |
| Reinforcement layer | on both sides, woven glass fibre prepeg 60 g/m² | on both sides, woven glass fibre prepeg 200 g/m² |
| Flexural modulus (MPa) | 3500 | 4000 |
| Flexural strength (MPa) | 40 | 40 |

A second aspect of the invention relates to a production method of a panel 10;10' such as those described above, the method comprising the steps of:
a. grinding the thermosetting polymer waste,
b. mixing the thermosetting resin and the glass fibre filler apart from the thermosetting polymer waste with the ground thermosetting polymer waste,
d. forming the mixture by curing the thermosetting resin such that it acts as a binder of the ground thermosetting polymer waste and of the glass fibre filler in order to obtain the panel.

Preferably, before forming the mixture, said mixture is placed on the reinforcement layer 2, with the core 1 being formed together with the reinforcement layer 2. A single forming step is thereby required to form the core and the reinforcement layer, and better adhesion between the core and the reinforcement layer is obtained in order to avoid delamination problems during use.

Furthermore, before forming the mixture, an additional reinforcement layer 2 can be placed on the mixture, with the core 1 being formed together with the two reinforcement layers 2 in order to produce sandwich type panels.

The method can comprise an additional forming step in which the finishing skin 3 is formed, and an attachment step after the additional forming step in which the finishing skin 3 is attached to at least one reinforcement layer 2 on which it is arranged by cold adhesion in order to produce panels comprising the finishing skin.

Preferably, constant temperature and pressure are applied in the forming step.

Although a panel for formwork in particular has been described, the panel according to the invention could also be used in other construction applications, such as in structural frames, baseboards, boards, ceilings, and floors, or any other application in construction requiring structural panels.

The features and/or aspects of the described panel are also valid and applicable to the production method and vice versa.

## Claims

1. Panel for concrete formwork comprising a polymer core (1) and a reinforcement layer (2) on at least one of the sides of the core (1), **characterised in that** the reinforcement layer (2) comprises woven glass fibre, and the core (1) comprises thermosetting polymer waste, a thermosetting resin, and a glass fibre filler, wherein the glass fibre filler is a glass fibre filler present in the thermosetting polymer waste and/or a glass fibre filler apart from the thermosetting polymer waste.

2. Panel according to claim 1, comprising a reinforcement layer (2) on either side of the core (1) forming a sandwich type panel.

3. Panel according to any of the preceding claims, wherein the thermosetting polymer waste comprises epoxy and/or melamine waste.

4. Panel according to any of the preceding claims, wherein the glass fibre filler is cut glass fibre yarns of a length between 5 mm and 35 mm, preferably between 10 mm and 15 mm.

5. Panel according to any of the preceding claims, wherein the percentage by weight of the thermosetting resin is between 5% and 15% of the weight of the core (1).

6. Panel according to any of the preceding claims, wherein the percentage by weight of the total glass fibre filler in the core (1) is at least 30% of the weight of the core (1), preferably 40%.

7. Panel according to any of the preceding claims, wherein the thermosetting resin is a phenolic resin.

8. Panel according to any of the preceding claims, wherein the woven glass fibre of the reinforcement layer (2) is pre-impregnated in a thermosetting resin, said thermosetting resin being of the same type as the thermosetting resin of the core (1), and the woven glass fibre of the reinforcement layer (2) preferably being a polymer moulding compound supplied in the form of a glass fibre-reinforced sheet.

9. Panel according to any of the preceding claims, wherein the reinforcement layer (2) has a basis weight of 60 to 1200 g/m², preferably 60 to 200 g/m².

10. Panel according to any of the preceding claims, comprising a finishing skin (3) on at least one reinforcement layer (2), the finishing skin (3) comprising melamine resin and aluminium oxide particles.

11. Panel according to claim 10, wherein the finishing skin (3) comprises a woven glass fibre mesh or a plurality of woven glass fibre meshes.

12. Panel according to claim 11, wherein the woven glass fibre mesh of the finishing skin (3) has a basis weight equal to or less than 200 g/m².

13. Production method of the panel according to any of the preceding claims, the method comprising the steps of:
- grinding the thermosetting polymer waste,
- mixing the thermosetting resin and the glass fibre filler apart from the thermosetting polymer waste with the ground thermosetting polymer waste, and
- forming the mixture by curing the thermosetting resin such that it acts as a binder of the ground thermosetting polymer waste and of the glass fibre filler in order to obtain the panel.

14. Production method according to claim 13, wherein before forming the mixture, said mixture is placed on the reinforcement layer (2), with the core (1) being formed together with the reinforcement layer (2).

15. Production method according to claim 13 or 14, wherein constant temperature and pressure are applied in the forming step.
